# FASCICULE DE BREVET EUROPEEN

(11) **EP 1 890 048 B1**
(45) Date de publication et mention de la délivrance du brevet: **17.06.2009**
(21) Numéro de dépôt: 07290915.3
(22) Date de dépôt: 20.07.2007
(51) Int. Cl.: F16D 23/14

(54) **Rondelle d'autocentrage pour butée d'embrayage de géométrie limitant la plastification des dents**
Selbstzentrierende Tellerfeder für Kupplungsausrücklager, deren Geometrie das Weichmachen der Zähne begrenzt
Self-alignment washer for release bearing with geometry limiting the plastifying of the teeth

(30) Priorité: 24.07.2006 FR 0606768
(43) Date de publication de la demande: 20.02.2008
(73) Titulaire: SNR ROULEMENTS, 74000 Annecy (FR)
(72) Inventeur: Berthier, Julien, 74410 Saint Jorioz (FR); Bouvard, Sébastien, 74000 Annecy (FR); Morin, Emmanuel, 74600 Montagny les Lanches (FR)
(74) Mandataire: Sayettat, Julien Christian

(56) Documents cités:
- EP-A1- 1 420 184
- DE-U1- 8 715 715

## Description

L'invention concerne une rondelle d'autocentrage pour butée d'embrayage de véhicule automobile, ainsi qu'un montage d'une butée d'embrayage sur un arbre d'une boîte de vitesses d'un véhicule automobile par l'intermédiaire d'une telle rondelle.

Dans les applications embrayage, le diaphragme monté sur l'ensemble côté moteur et l'arbre primaire de la boîte de vitesses ne sont pas parfaitement concentriques.

Pour assurer la fonction d'autocentrage du diaphragme sur l'arbre, il est connu d'utiliser une rondelle dite d'autocentrage qui génère un effort d'autocentrage entre ledit arbre et la butée.

Pour ce faire, la butée est montée sur l'arbre par l'intermédiaire d'une telle rondelle de sorte à permettre des débattements élastiques axiaux et radiaux de la butée relativement à l'arbre.

Selon une réalisation connue notamment du document EP-1420184, la rondelle comprend une couronne annulaire présentant une pluralité d'ondes axiales et une pluralité de dents qui s'étendent depuis le bord intérieur de ladite couronne. Ainsi, en prévoyant que la rondelle soit réalisée dans un matériau présentant une limite élastique au moins égale à 1000 MPa à 20°C, la rondelle permet de générer l'effort d'autocentrage requis.

Pour le montage d'une telle rondelle, il est nécessaire de la pousser sur l'arbre au moyen d'un poinçon, ce qui peut induire des déformations de celle-ci notamment au niveau des dents. Ces déformations peuvent provoquer une plastification des dents, ce qui est préjudiciable à la fiabilité dans le temps de la rondelle pour sa fonction d'autocentrage.

L'invention a pour but de résoudre les problèmes de l'art antérieur en proposant notamment une rondelle d'autocentrage dont les caractéristiques géométriques sont optimisées de sorte à éviter la plastification des dents.

A cet effet, et selon un premier aspect, l'invention propose une rondelle d'autocentrage selon la revendication 1.

Selon un deuxième aspect, l'invention propose un montage d'une butée d'embrayage sur un arbre d'une boîte de vitesses d'un véhicule automobile, dans lequel ladite butée est montée sur l'arbre par l'intermédiaire d'une telle rondelle d'autocentrage.

D'autres objets et avantages de l'invention apparaîtront dans la description qui suit faite en référence aux figures annexées, dans lesquelles :
- la figure 1 est une vue partielle en coupe d'un montage d'une butée d'embrayage selon un mode de réalisation de l'invention ;
- la figure 2 est une vue de côté de la rondelle d'autocentrage utilisée dans le montage selon la figure 1 ;
- la figure 3 est une vue partielle de dessus de la rondelle d'autocentrage selon la figure 2 ;
- la figure 4 est une vue partielle en coupe de la rondelle d'autocentrage selon la figure 3 au niveau d'une dent.

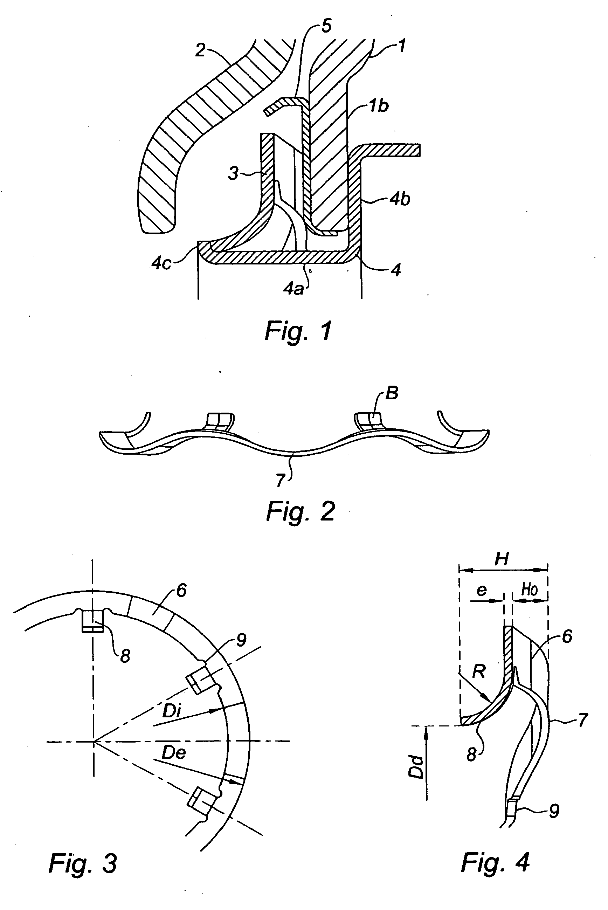

La figure 1 représente un montage d'une butée d'embrayage sur un arbre d'une boîte de vitesses de véhicule automobile, ladite butée comprenant une bague intérieure 1 et une bague extérieure 2 réalisées en tôle emboutie qui sont montrées partiellement sur la figure 1.

De façon connue, la butée comprend des corps roulants, typiquement des billes (non représentées), qui sont disposés entre les bagues 1, 2 de sorte à permettre leur rotation relative.

Dans le mode de réalisation représenté, la bague intérieure 1 est solidarisée à l'arbre de la boîte de vitesses pour être fixe et la bague extérieure 2 est destinée à être actionnée par le diaphragme en rotation par rapport audit arbre. Toutefois, le montage selon l'invention n'est pas limité à une telle réalisation, en particulier un montage prévoyant une bague extérieure solidaire de l'arbre et une bague intérieure entraînée en rotation est également envisageable.

Pour compenser les défauts de concentricité entre le diaphragme et l'arbre, le montage comprend en outre une rondelle d'autocentrage 3 par l'intermédiaire de laquelle la butée est montée sur l'arbre.

Selon le mode de réalisation représenté, le montage comprend un support annulaire 4 comprenant une portée axiale 4a de montage sur l'arbre et une portée radiale 4b en appui sur une portée correspondante 1b de la bague intérieure 1 de la butée. En outre, un déflecteur 5 est associé sur la portée 1b de la bague intérieure 1 et à l'opposé de la portée radiale 4b du support 4.

Comme représenté sur les figures 2 à 4, la rondelle 3 comprend une couronne annulaire 6 présentant une pluralité d'ondes axiales 7 et une pluralité de dents 8 qui s'étendent depuis le bord intérieur de ladite couronne. Pour assurer la fonction d'autocentrage, la rondelle 3 est réalisée dans un matériau présentant une limite élastique au moins égale à 1000 MPa à 20°C. Dans un exemple de réalisation, la rondelle 3 est réalisée en acier de type XC75 trempé ou encore en Inox.

Comme représenté sur la figure 1, la rondelle d'autocentrage 3 est disposée de sorte que les ondes 7 soient en appui sur la portée 1b de la bague intérieure 1 à l'opposé de la portée radiale 4b du support 4, les dents 8 étant en appui sur la portée axiale 4a dudit support. Plus précisément, les ondes 7 sont en appui sur le déflecteur 5. En outre, la portée radiale 4a comprend un repli annulaire externe 4c qui s'étend sensiblement radialement, les dents 8 étant en appui sur ledit repli de sorte à former butée axiale pour la rondelle 3.

Pour assurer une fiabilité optimale de la fonction d'autocentrage, notamment en évitant la plastification des dents 7, l'invention prévoit que la rondelle 3 remplisse la condition géométrique suivante : 2 ≤ R/e ≤ 6, R étant le rayon de courbure de la zone de jonction entre les dents 8 et la couronne 6, e étant l'épaisseur de la couronne 6.

Plus particulièrement, il est souhaitable que le rapport R/e soit au moins égal à 4. En outre, un rayon de courbure R supérieur ou égal à 1 mm est envisageable.

Ces caractéristiques permettent notamment de limiter la plastification des dents 8 lors de la disposition de la rondelle d'autocentrage 3 sur le support annulaire 4, en particulier en limitant les contraintes de déformation des dents 8 lors de leur passage sur le repli 4c. En outre, la géométrie des dents 8 permet d'optimiser la fiabilité des efforts d'autocentrage qui doivent être appliqués.

Selon une autre condition géométrique suivant l'invention, la rondelle d'autocentrage peut être telle que : 1 ≤ (Di-Dd)/R ≤ 4, Di étant le diamètre intérieur de la couronne 6 et Dd étant le diamètre sous les dents 8.

En outre, la rondelle 3 selon l'invention peut remplir la condition géométrique suivante : 4 ≤ (H-Ho)/e ≤ 8, H étant la dimension axiale de la rondelle 3 et Ho étant la dimension axiale des ondes 7.

Par ailleurs, la rondelle d'autocentrage 3 peut présenter seule ou en combinaison l'une des caractéristiques géométriques suivantes :
- 2,4 < Ho/e ≤ 5, plus particulièrement le rapport Ho/e est supérieur ou égal à 3,5 ;
- le nombre d'ondes N est tel que le rapport entre la somme des diamètres intérieur Di et extérieur De de la couronne 6 exprimés en millimètre et ledit nombre d'ondes est compris entre 10,5 et 15 inclus ;
- le nombre d'ondes est égal à 6 ;
- le rapport entre la différence (De - Di) et l'épaisseur e est compris entre 10 et 16 inclus.

Ces caractéristiques permettent notamment de limiter la plastification des ondes 7 lors de la disposition de la rondelle d'autocentrage 3 sur le support annulaire 4, en particulier en limitant les contraintes de déformation des ondes 7 sur le déflecteur 5. En outre, la géométrie des ondes 7 permet d'optimiser la fiabilité des efforts d'autocentrage qui doivent être appliqués.

Par ailleurs et comme représenté sur les figures, une découpe radiale 9 est prévue dans la couronne 6 respectivement de part et d'autre de la zone de jonction entre les dents 8 et la couronne 6. Plus précisément, les découpes 9 ont une forme sensiblement cylindrique.

A titre d'exemple, on donne ci-dessous les caractéristiques géométriques principales de la rondelle d'autocentrage 3 représentée sur les figures :
H = 4,4 mm
Ho = 1,8 mm
e = 0,4 mm
N=6
De = 38 mm
Di = 32,7 mm
Dd = 28 mm
R=2mm

## Revendications

1. Rondelle d'autocentrage (3) pour butée d'embrayage de véhicule automobile, ladite rondelle comprenant une couronne annulaire (6) présentant une pluralité d'ondes axiales (7) et une pluralité de dents (8) qui s'étendent depuis le bord intérieur de ladite couronne, ladite rondelle étant réalisée dans un matériau présentant une limite élastique au moins égale à 1000 MPa à 20°C, ladite rondelle étant **caractérisée en ce qu'**elle rempli la condition géométrique suivante : 2 ≤ R/e ≤ 6, R étant le rayon de courbure de la zone de jonction entre les dents (8) et la couronne (6), e étant l'épaisseur de la couronne (6), une découpe radiale (9) étant prévue dans la couronne (6) respectivement de part et d'autre de la zone de jonction entre les dents (8) et la couronne (6).

2. Rondelle d'autocentrage selon la revendication 1, **caractérisée en ce que** le rapport R/e est au moins égal à 4.

3. Rondelle d'autocentrage selon la revendication 1 ou 2, **caractérisée en ce que** le rayon de courbure R est supérieur ou égal à 1 mm.

4. Rondelle d'autocentrage selon l'une quelconque des revendications 1 à 3, **caractérisée en ce qu'**elle est réalisée en acier de type XC75 trempé.

5. Rondelle d'autocentrage selon l'une quelconque des revendications 1 à 4, **caractérisée en ce qu'**elle rempli la condition géométrique suivante : 1 ≤ (Di-Dd)/R ≤ 4, Di étant le diamètre intérieur de la couronne (6) et Dd étant le diamètre sous les dents (8).

6. Rondelle d'autocentrage selon l'une quelconque des revendications 1 à 5, **caractérisée en ce qu'**elle rempli la condition géométrique suivante: 4 ≤ (H-Ho)/e ≤ 8, H étant la dimension axiale de la rondelle (3) et Ho étant la dimension axiale des ondes (7).

7. Rondelle d'autocentrage selon l'une quelconque des revendications 1 à 6, **caractérisée en ce qu'**elle présente seule ou en combinaison l'une des caractéristiques géométriques suivantes
• 2,4 < Ho/e ≤ 5 ;
• le nombre d'ondes N est tel que le rapport entre la somme des diamètres intérieur Di et extérieur De de la couronne (6) exprimés en millimètre et ledit nombre d'ondes est compris entre 10,5 et 15 inclus ;
• le nombre d'ondes est égal à 6 ;
• le rapport entre la différence (De - Di) et l'épaisseur e est compris entre 10 et 16 inclus.

8. Montage d'une butée d'embrayage sur un arbre d'une boîte de vitesses d'un véhicule automobile, dans lequel ladite butée est montée sur l'arbre par l'intermédiaire d'une rondelle d'autocentrage (3) selon l'une quelconque des revendications précédentes.

9. Montage selon la revendication 8, intégrant en outre un support annulaire (4) comprenant une portée axiale (4a) de montage sur l'arbre et une portée radiale (4b) en appui sur une portée correspondante (1b) d'une bague (1) de la butée, dans lequel la rondelle d'autocentrage (3) est disposée de sorte que les ondes (7) soient en appui sur ladite portée de la bague (1) et à l'opposé de la portée radiale (4b) du support (4), les dents (8) étant en appui sur la portée axiale (4a) dudit support.

10. Montage selon la revendication 9, dans lequel la portée radiale (4a) comprend un repli annulaire externe (4c) qui s'étend sensiblement radialement, les dents (8) étant en appui sur ledit appui de sorte à former butée axiale pour la rondelle (3).

## Claims

1. Self-centring washer (3) for throw-out bearing of an automobile, said washer including an annular ring (6) having a plurality of axial waves (7) and a plurality of teeth (8) which extend from the inner edge of said ring, said washer being made of a material having a limit of elasticity at least equal to 1000 MPa at 20°C, said washer being **characterised in that** it fulfils the following geometrical condition: 2 ≤ R/e ≤ 6, R being the radius of curvature of the junction zone between the teeth (8) and the ring (6), e being the thickness of the ring (6), a radial blank (9) being provided in the ring (6) respectively on either side of the junction zone between the teeth (8) and the ring (6).

2. Self-centring washer set forth in claim 1, **characterised in that** the R/e ratio is at least equal to 4.

3. Self-centring washer set forth in claim 1 or 2, **characterised in that** the radius of curvature R is greater than or equal to 1 mm.

4. Self-centring washer as set forth in any of claims 1 to 3, **characterised in that** it is made of XC75 type hardened steel.

5. Self-centring washer as set forth in any of claims 1 to 4, **characterised in that** it fulfils the following geometrical condition: 1 ≤ (Di-Dd)/R ≤ 4, Di being the interior diameter of the ring (6) and Dd being the diameter under the teeth (8).

6. Self-centring washer as set forth in any of claims 1 to 5, **characterised in that** it fulfils the following geometrical condition:
4 ≤ (H-Ho)/e ≤ 8, H being the axial dimension of the washer (3) and Ho being the axial dimension of the waves (7).

7. Self-centring washer as set forth in any of claims 1 to 6, **characterised in that** it has alone or in combination one of the following geometrical characteristics
- 2,4 < Ho/e ≤ 5 ;
- the number of waves N is such that the ratio between the sum of the interior Di and exterior De diameters of the ring (6) expressed in millimetres and said number of waves is between 10.5 and 15;
- the number of waves is equal to 6;
- the ratio between the difference (De - Di) and the thickness e is between 10 and 16.

8. Assembly of a throw-out bearing on a shaft of a gearbox of an automobile, wherein said bearing is mounted on the shaft by the intermediary of a self-centring washer (3) as set forth in any of the preceding claims.

9. Assembly set forth in claim 8, further incorporating an annular support (4) including an axial mounting surface (4a) on the shaft and a radial surface (4b) against a corresponding surface (1b) of a ring (1) of the bearing, wherein the self-centring washer (3) is arranged in such a way that the waves (7) are against said surface of the ring (1) and opposite from the radial surface (4b) of the support (4), the teeth (8) being against the axial surface (4a) of said support.

10. Assembly set forth in claim 9, wherein the radial surface (4a) includes an external annular lap (4c) which extends substantially radially, the teeth (8) being against said support in such a way as to form an axial bearing for the washer (3).

## Patentansprüche

1. Selbstzentrierscheibe (3) für einen Kraftfahrzeug-Kupplungsanschlag, wobei die Scheibe einen ringförmigen Kranz (6) umfasst, der eine Vielzahl von axialen Wellenlinien (7) und eine Vielzahl von Zähnen (8) aufweist, die sich vom inneren Rand des Kranzes her erstrecken, wobei die Scheibe aus einem Material ausgebildet ist, das eine Elastizitätsgrenze aufweist, die bei 20 °C mindestens gleich 1000 MPa ist, wobei die Scheibe **dadurch gekennzeichnet ist, dass** sie folgende geometrische Bedingung erfüllt: 2 ≤ R/e ≤ 6, wobei R der Krümmungsradius der Verbindungszone zwischen den Zähnen (8) und dem Kranz (6) ist, wobei e die Dicke des Kranzes (6) ist, wobei ein radialer Ausschnitt (9) in dem Kranz (6) vorgesehen ist, jeweils auf beiden Seiten der Verbindungszone zwischen den Zähnen (8) und dem Kranz (6).

2. Selbstzentrierscheibe nach Anspruch 1, **dadurch gekennzeichnet, dass** das Verhältnis R/e mindestens gleich 4 ist.

3. Selbstzentrierscheibe nach Anspruch 1 oder 2, **dadurch gekennzeichnet, dass** der Krümmungsradius R größer oder gleich 1 mm ist.

4. Selbstzentrierscheibe nach einem der Ansprüche 1 bis 3, **dadurch gekennzeichnet, dass** sie aus vergütetem Stahl Typ XC75 ausgebildet ist.

5. Selbstzentrierscheibe nach einem der Ansprüche 1 bis 4, **dadurch gekennzeichnet, dass** sie folgende geometrische Bedingung erfüllt: 1 ≤ (Di-Dd)/R ≤ 4, wobei Di der Innendurchmesser des Kranzes (6) und Dd der Durchmesser unter den Zähnen (8) ist.

6. Selbstzentrierscheibe nach einem der Ansprüche 1 bis 5, **dadurch gekennzeichnet, dass** sie folgende geometrische Bedingung erfüllt: 4 ≤ (H-Ho)/e ≤ 8, wobei H die Axialabmessung der Scheibe (3) und Ho die Axialabmessung der Wellenlinien (7) ist.

7. Selbstzentrierscheibe nach einem der Ansprüche 1 bis 6, **dadurch gekennzeichnet, dass** sie alleine oder kombiniert eine der folgenden geometrischen Eigenschaften aufweist:
- 2,4 < Ho/e ≤ 5;
- die Anzahl der Wellenlinien N ist derart, dass das Verhältnis zwischen der Summe des Innendurchmessers Di und des Außendurchmessers De des Kranzes (6), in Millimetern ausgedrückt, und der Anzahl der Wellenlinien zwischen 10,5 und einschließlich 15 liegt;
- die Anzahl der Wellenlinien gleich 6 ist;
- das Verhältnis zwischen dem Unterschied (De-Di) und der Dicke e zwischen 10 und einschließlich 16 liegt.

8. Einbau eines Kupplungsanschlags auf einer Welle eines Getriebes eines Kraftfahrzeugs, wobei der Anschlag auf der Welle über eine Selbstzentrierscheibe (3) nach einem der vorhergehenden Ansprüche eingebaut wird.

9. Einbau nach Anspruch 8, ferner umfassend einen kreisförmigen Träger (4), der eine axiale Lagerfläche (4a) zum Einbauen auf der Welle und eine radiale Lagerfläche (4b), die auf einer entsprechenden Lagerfläche (1b) eines Rings (1) des Anschlags aufliegt, umfasst, wobei die Selbstzentrierscheibe (3) derart angeordnet ist, dass die Wellenlinien (7) auf der Lagerfläche des Rings (1) aufliegen und gegenüber der radialen Lagerfläche (4b) des Trägers (4), wobei die Zähne (8) auf der axialen Lagerfläche (4a) des Trägers aufliegen.

10. Einbau nach Anspruch 9, wobei die radiale Auflagefläche (4a) einen äußeren ringförmigen Umschlag (4c) umfasst, der sich im Wesentlichen radial erstreckt, wobei die Zähne (8) auf der Auflage aufliegen, um für die Scheibe (3) einen axialen Anschlag zu bilden.
